# EUROPEAN PATENT APPLICATION

(11) **EP 4 757 264 A1**
(43) Date of publication of application: **10.06.2026**
(21) Application number: 24848364.6
(22) Date of filing: 01.08.2024
(51) Int. Cl.: H04L 41/0253

(54) **SCENARIO SERVICE INTERACTION METHOD AND APPARATUS, DEVICE, MEDIUM AND PROGRAM PRODUCT**

(30) Priority: 03.08.2023 CN 202310974968
(71) Applicant: Beijing Zitiao Network Technology Co., Ltd., Beijing 100190 (CN)
(72) Inventor: ZHANG, Tiantian, Beijing 100028 (CN); FANG, Angxiang, Beijing 100028 (CN)
(74) Representative: Grünecker Patent- und Rechtsanwälte PartG mbB
(86) International application number: PCT/CN2024/109320
(87) International publication number: WO 2025/026410

(57) **Abstract**

Embodiments of the disclosure provide a method, an apparatus, a device, a medium and a program product for scenario service interaction. The method includes: displaying a service information setting page in response to a first trigger operation input in a target service scene, where the service information setting page displays a service information setting item associated with at least one scenario service provided by a target service scene, and the service information setting item at least includes a restriction information setting item; in response to a second trigger operation for the restriction information setting item, obtaining a set restriction attribute value corresponding to the restriction information setting item, and displaying the restriction attribute value; and in response to the third trigger operation, determining a service response mode corresponding to the scenario service based on the restriction information setting item and the restriction attribute value. According to the technical scheme provided by the embodiment of the invention, the effect of flexibly setting the restriction information of the scenario service is achieved.

## Description

This application claims the benefit of Chinese Patent Application No. 202310974968.3, filed Aug. 3, 2023, entitled "Method, Apparatus, Device, Medium and Program Product for Scenario service Interaction", which is incorporated herein by reference in its entirety.

### FIELD

Embodiments of the present disclosure relate to Internet technologies, and in particular, to a method, an apparatus, a device, a medium, and a program product for scenario service interaction.

### BACKGROUND

With the rapid development of computer technologies and Internet technologies, a wide variety of service scenarios emerge, and in a service scenario, a scenario function and an interaction manner with a user are often enriched through various scenario services associated therewith.

In the related art, the response manner of each scenario service in the service scenario to the interaction operation is generally set by the system, and it is intended to ensure that the interaction operation for the scenario service can be responded quickly to improve the use interaction for the scenario service.

However, in practical applications, it is inevitable to revoke the scenario service after the interaction service request is quickly responded, which undoubtedly increases the data processing amount of the system, occupies the system processing resources, and may even decrease the response efficiency of the system to the service request due to the large data processing pressure of the system. In some special scenarios, for example, a virtual service scenario, there may be a problem that the scenario service revocation is difficult and the procedure is cumbersome, which increases the cost for interaction, thereby affecting the experience of service usage.

### SUMMARY

The present disclosure provides a method, an apparatus, a device, a medium and a program product for scenario service interaction, so that the effect of flexibly setting the restriction information of the scenario service is achieved, and the normalization of the scenario service interaction operation is improved.

According to a first aspect, embodiments of the present disclosure provide a method for scenario service interaction, and the method includes: displaying a service information setting page in response to a first trigger operation inputted in a target service scenario, where the service information setting page displays a service information setting item associated with at least one scenario service provided by the target service scenario, and the service information setting item at least includes a restriction information setting item; obtaining, in response to a second trigger operation for the restriction information setting item, a set restriction attribute value corresponding to the restriction information setting item, and displaying the restriction attribute value; determining, in response to a third trigger operation, a service response manner corresponding to the scenario service based on the restriction information setting item and the restriction attribute value, where the service response manner is configured to generate service response data according to service request data corresponding to the scenario service.

According to a second aspect, embodiments of the present disclosure further provide an apparatus for scenario service interaction, and the apparatus includes: a setting page display module configured to display a service information setting page in response to a first trigger operation inputted in a target service scenario, where the service information setting page displays a service information setting item associated with at least one scenario service provided by the target service scenario, and the service information setting item at least includes a restriction information setting item; a restriction information setting module configured to obtain, in response to a second trigger operation for the restriction information setting item, a set restriction attribute value corresponding to the restriction information setting item, and display the restriction attribute value; and a response manner determination module configured to determine, in response to a third trigger operation, a service response manner corresponding to the scenario service based on the restriction information setting item and the restriction attribute value, where the service response manner is configured to generate service response data according to service request data corresponding to the scenario service.

According to a third aspect, embodiments of the present disclosure further provide an electronic device, the electronic device includes: one or more processors; and a storage device configured to store one or more programs, the one or more programs, when executed by the one or more processors, causing the one or more processors to implement the method for scenario service interaction of any of embodiments of the present disclosure.

According to a fourth aspect, embodiments of the present disclosure further provide a storage medium including computer-executable instructions, where the computer-executable instructions, when executed by a computer processor, perform the method for scenario service interaction of any of embodiments of the present disclosure.

According to a fifth aspect, an embodiment of the present disclosure further provides a computer program product, where the computer program product includes a computer program, the computer program, when executed by a processor, implements the method for scenario service interaction of any of embodiments of the present disclosure.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numbers refer to the same or similar elements. It should be understood that the drawings are schematic, and elements and elements are not necessarily drawn to scale.
FIG. 1 is a schematic flowchart of the method for scenario service interaction according to an embodiment of the present disclosure;
FIG. 2 is a schematic diagram of a service information setting page according to an embodiment of the present disclosure;
FIG. 3 is a schematic diagram of a preset entry hyperlink in a target live streaming room according to an embodiment of the present disclosure;
FIG. 4 is a schematic diagram of a preset service panel of a target live streaming room according to an embodiment of the present disclosure;
FIG. 5 is a schematic flowchart of another method for scenario service interaction according to an embodiment of the present disclosure;
FIG. 6 is a schematic flowchart of another method for scenario service interaction according to an embodiment of the present disclosure;
FIG. 7 is a schematic structural diagram of an apparauts for scenario service interaction according to an embodiment of the present disclosure;
FIG. 8 is a schematic structural diagram of an electronic device according to an embodiment of the present disclosure.

### DETAILED DESCRIPTION

Embodiments of the present disclosure will be described in more detail below with reference to the accompanying drawings. While certain embodiments of the present disclosure are shown in the drawings, it is to be understood that the present disclosure may be implemented in various forms, and should not be construed as limited to the embodiments set forth herein, and vice versa. It should be understood that the drawings and embodiments of the present disclosure are for illustrative purposes only and are not intended to limit the scope of the present disclosure.

It should be understood that the steps recited in the method embodiments of the present disclosure may be performed in different orders, and/or in parallel. Further, the method embodiments may include additional steps and/or omit performing the illustrated steps. The scope of the present disclosure is not limited in this respect.

As used herein, the term "including" and variations thereof are open-ended, i.e., "including but not limited to". The term "based on" is "based at least in part on". The term "one embodiment" means "at least one embodiment"; the term "another embodiment" means "at least one further embodiment"; the term "some embodiments" means "at least some embodiments". The relevant definitions of other terms will be given below.

It should be noted that the concepts such as "first" and "second" mentioned in this disclosure are merely used to distinguish different apparatuses, modules, or units, and are not intended to limit the order of functions performed by the apparatuses, modules, or units or the mutual dependency relationship.

It should be noted that the modification of "a" and "a plurality" mentioned in this disclosure is illustrative and not limiting, and those skilled in the art should understand that "one or more" should be understood unless the context clearly indicates otherwise.

The names of messages or information exchanged between multiple apparatuses in embodiments of the present disclosure are for illustrative purposes only and are not intended to limit the scope of such messages or information.

It can be understood that, before the technical solutions disclosed in embodiments of the present disclosure are used, the types, the usage scope, and the usage scenario of personal information related to the present disclosure and the like should be notified to the user in an appropriate manner according to the relevant laws and regulations and obtain the authorization of the user.

For example, in response to receiving an active request from a user, prompt information is sent to the user to explicitly prompt the user that the requested operation will need to acquire and use the personal information of the user. Therefore, the user can autonomously select whether to provide personal information to software or hardware executing the operation of the technical solution of the present disclosure according to the prompt information.

As an optional but non-limiting implementation, in response to receiving the active request of the user, the manner of sending the prompt information to the user may be, for example, a pop-up window, and the prompt information may be presented in a text manner in the pop-up window. In addition, the pop-up window may further carry a selection control for the user to select "agree" or "not agree" to provide personal information to the electronic device.

It may be understood that the foregoing notification and obtaining a user authorization process is merely illustrative, and does not constitute a limitation on implementations of the present disclosure, and other manners of meeting related laws and regulations may also be applied to implementations of the present disclosure.

It may be understood that the data involved in the technical solution (including but not limited to the data itself, the acquisition or use of the data) should follow the requirements of the corresponding laws and regulations and related regulations.

Before the technical solution is introduced, the application scenario may be illustratively described first. The technical solution of embodiments of the present disclosure can be applied to a scenario of scenario service interaction in any target service scenario. For example, in any target service scenario, the user may interact with the object in the target service scenario through the scenario service included in the target service scenario. However, because the setting information of each scenario service in the target service scenario is usually set uniformly by the system, implementing service interaction based on the interaction manner of the above scenario service may have a problem that after the interaction service request response ends, the user revokes the interaction service request. In this case, based on the technical solutions of embodiments of the present disclosure, the service information corresponding to the scenario service may be set based on the service information setting page, and the restriction information setting item may be set to obtain the restriction attribute value corresponding to the restriction information setting item, and then the service response manner corresponding to the scenario service may be determined according to the restriction information setting item and the restriction attribute value. So that the effect of flexibly setting the restriction information of the scenario service may be achieved, the standardization of the scenario service interaction operation may be improved, and the interaction experience of the user in the target service scenario may be improved.

According to the technical solution of embodiments of the present disclosure, the service information setting page is displayed in response to the first trigger operation inputted in the target service scene, where the service information setting page displays the service information setting item associated with the at least one scenario service provided by the target service scene, and the service information setting item at least includes the restriction information setting item, the setting function for the service information can be provided for the user, and the restriction information setting item is visually displayed, the interaction entry for setting the restriction information is provided for the user. Further, in response to the second trigger operation for the restriction information setting item, the set restriction attribute value corresponding to the restriction information setting item is obtained, and the restriction attribute value is displayed, the flexible setting for the restriction information by the user is supported, the restriction attribute value is displayed, the user can clearly and intuitively know the setting condition for the restriction information. And finally, in response to the third trigger operation, the service response manner corresponding to the scenario service is determined based on the restriction information setting item and the restriction attribute value, the technical problems due to system resource occupation, large data processing pressure, reduced processing efficiency and tedious service revocation processing program in the related technology are solved, the effect of flexibility setting for the restriction information of the scenario service is achieved, the standardization of the scenario service interaction operation is improved, and the interaction experience of the user in the service scene is improved.

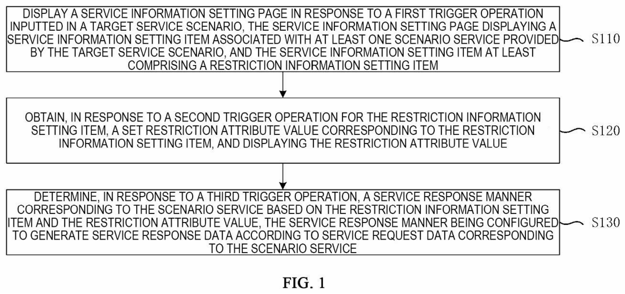

FIG. 1 is a schematic flowchart of a method for scenario service interaction according to an embodiment of the present disclosure. This embodiment of the present disclosure is applicable to the situation where the service information associated with the scene service in the target service scene is set, so that the service response manner is determined based on the set service information. This method can be executed by an apparatus for scenario service interaction, which can be implemented in the form of software and/or hardware. Optionally, it can be implemented through an electronic device, which can be a mobile terminal, a PC terminal or a server, etc.

As shown in FIG. 1, the method of this embodiment may specifically include:
S110: A service information setting page is displayed in response to a first trigger operation inputted in a target service scenario, where the service information setting page displays a service information setting item associated with at least one scenario service provided by the target service scenario, and the service information setting item at least includes a restriction information setting item.

It should be noted that, the apparatus for executing the method for scenario service interaction provided in embodiments of the present disclosure may be integrated into the application software that supports the scenario service interaction function, and the software may be installed in the electronic device. The application software may be a type of software interacting with the scenario service, and the specific application software is not described herein again, as long as interaction of the scenario service may be implemented. The application may also be a specially developed application and integrated in the software implementing the interaction of the scenario service, or integrated in a corresponding page, and the user may achieve the interaction of the scenario service through an integrated page in the PC terminal.

The target service scenario may be understood as a construction environment in which the service is located, and refers to an environment in which service execution, transmission, and interaction are performed. The target service scenario may include a plurality of scenarios, and optionally, may include a live streaming scenario, a game scenario, an effect image processing scenario, and the like. It should be noted that the target service scenario may be a submodule preset in the application software, and belongs to one of the application functions included in the application software. Moreover, it may be displayed in a related page of the application software. Alternatively, the target service scenario may also be integrated into a specially developed application, and the application may be used to specifically execute the target service scenario. The target service scenario may include one or more scenario services. Different target service scenarios may provide scenario services common to different target service scenarios, or may provide scenario services specific to the corresponding target service scenarios. The first trigger operation may be understood as an operation of displaying the service information setting page corresponding to the target service scenario after triggering. The service information setting page may be understood as a page used to provide a service information item setting interaction operation corresponding to the target service scenario. The service information setting page displays a service information setting item associated with at least one scenario service provided by the target service scenario.

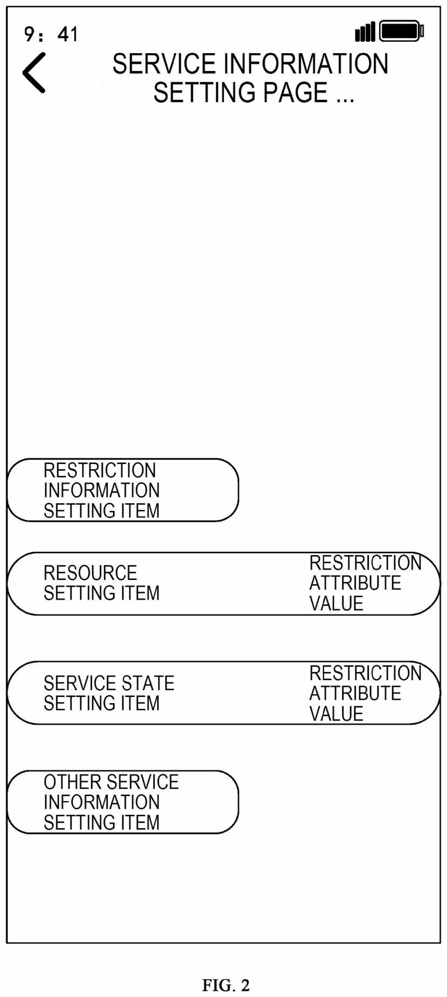

The scenario service may be a service that may be triggered and executed, which may be provided by the target service scenario. For different target service scenarios, the scenario services provided by the target service scenarios may also be different. Optionally, in accordance with that the target service scenario is a live streaming scenario, the scenario service provided by the target service scenario may include a live streaming interaction service, an information posting service, and a live streaming image processing service. The service information setting item may be understood as an operation entry configured to set service information associated with the scenario service. The service information setting item may include one or more information setting items. Optionally, the service information setting item may include a restriction information setting item, a scenario service execution information setting item, and the like. For example, as shown in FIG. 2, it is a schematic diagram of a service information setting page. The service information setting page includes the restriction information setting item and other service information setting items. The restriction information setting item may include a resource setting item and a service state setting item.

In this embodiment, a control for triggering the service information setting page display may be developed in advance, and the control may be displayed in a display interface corresponding to the target service scenario. In an application process, in accordance with that a trigger operation for the control is detected, it may be determined that a first trigger operation inputted in the target service scenario is detected. Further, the service information setting page may be displayed.

Optionally, in response to the first trigger operation inputted in the target service scenario includes: in response to a fourth trigger operation acting on a preset entry trigger control corresponding to the target service scenario.

The entry trigger control may be understood as an entry control for triggering the service information setting page to display. The entry trigger control may be dynamically or statically displayed in the target display interface of the target service scenario. In actual application, in accordance with that the entry trigger control is dynamically displayed in the target display interface, when it is detected that the trigger operation is presented for the scenario interface of the target service scenario, and the target display interface of the target service scenario is presented, the preset entry trigger control may be displayed at any position in the target display interface to input the trigger operation for the entry trigger control in the target display interface. Further, in accordance with that the display duration of the entry trigger control reaches the preset display duration, or the display area of the entry trigger control is covered by another information display area, the entry trigger control may not display the target display interface in the target service scenario. Therefore, the dynamic display effect for the entry trigger control can be realized. In accordance with that the entry trigger control is dynamically displayed in the target display interface, in the development stage of the target service scenario, a plurality of scenario services may be preset, different information setting controls are respectively set for each scenario service, and the plurality of set information setting controls are displayed in a preset display area in the target display interface of the target service scenario, and the information setting control may be used as an entry trigger control. Therefore, the effect of statically displaying the entry trigger control in the preset display area in the target display interface can be achieved. It should be noted that, for the target display interface of the target service scenario, the statically displayed entry trigger control and the dynamically displayed entry trigger control may be simultaneously displayed in the target display interface. The fourth trigger operation may be understood as a trigger operation for the entry trigger control displayed in the target display interface of the target service scenario.

In an actual application, in accordance with that a selection trigger operation for the target service scenario is detected, a target display interface of the target service scenario may be presented. Further, the entry trigger control corresponding to the target service scenario may be statically or dynamically displayed in the target display interface of the target service scenario. Further, in accordance with that the fourth trigger operation for the entry trigger control displayed in the target display interface is detected, the fourth trigger operation may be responded. Thus, the service information setting page may be presented. Such settings has the advantages that the operation object of the target service scenario is conveniently guided to set the service information, the setting step for the service information is simplified, the efficiency of setting the service information is improved, and the usage experience of the user is improved.

It should be noted that, for the statically displayed entry trigger control and the dynamically displayed entry trigger control, the corresponding control display forms thereof are different. Therefore, before responding to the fourth trigger operation acting on the preset entry trigger control corresponding to the target service scenario, the entry trigger control may be determined in the target display interface of the target service scenario. Optionally, when the target service scenario is a live streaming scenario, before responding to the fourth trigger operation acting on the entry trigger control, at least one of the following operations are further included:

The first operation may be: displaying a preset entry hyperlink in a live streaming image of the target live streaming room, and using the preset entry hyperlink as an entry trigger control.

Secondly, the target live streaming room may be a live streaming room capable of displaying the entry trigger control. The target live streaming room may be any live streaming room in the live streaming scenario. Optionally, the target live streaming room may be a live streaming room that is entered for the first time within a preset time period; or, each live streaming room that is entered within a preset time period; or one or more live streaming rooms randomly selected from a plurality of live streaming rooms that is entered within a preset time period; or a part of live streaming rooms selected according to a preset rule (for example, a preset number of live streaming rooms per interval, etc.). The preset entry hyperlink may be a preset link from the live streaming image towards the service information setting page. The preset entry hyperlink may have a plurality of display forms, and optionally, may include a text hyperlink, a picture hyperlink, a multimedia file link, or the like. In this embodiment, the preset entry hyperlink may be displayed in the preset display area in the live streaming image in the form of a text message.

In some embodiments, the entry hyperlink may be preset according to the service information setting page to be linked. Further, when determining the target live streaming room and entering the target live streaming room, the preset entry hyperlink may be displayed in the live streaming image of the target live streaming room. Further, the preset entry hyperlink displayed in the live streaming image may be used as the entry trigger control. Furthermore, when a trigger operation acting on the preset entry hyperlink is detected, it may be determined that the fourth trigger operation acting on the entry trigger control is detected. Thus, in response to the fourth trigger operation, the service information setting page is displayed.

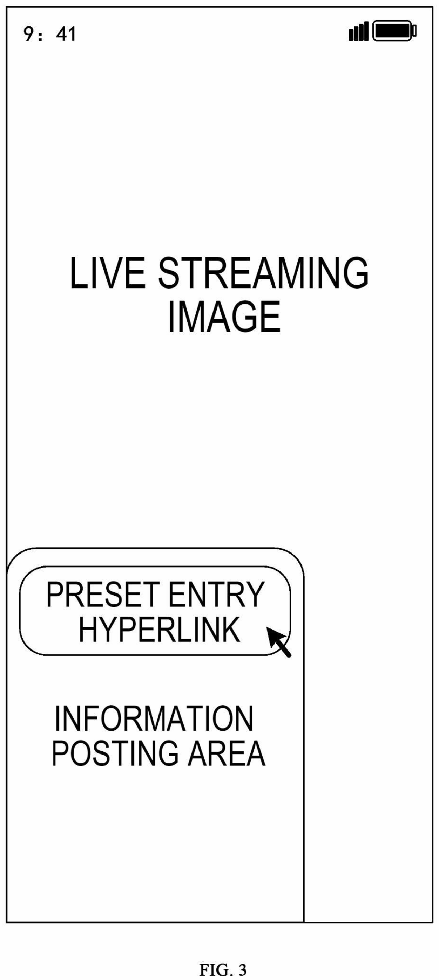

For example, as shown in FIG. 3, in accordance with that the target live streaming room is entered, the preset entry hyperlink may be displayed in the information posting area in the live streaming image, the displayed preset entry hyperlink may be used as the entry trigger control, and when the mouse cursor (an arrow in the figure) inputs the trigger operation for the entry trigger control, the service information setting page may be displayed.

The second operation may be: displaying a service information setting button in a preset service panel of a target live streaming room, and using the service information setting button as an entry trigger control.

The preset service panel may be a preset page including at least one live streaming service information setting button associated with the target live streaming room. The service information setting button may be a component that displays the service information setting page after being triggered.

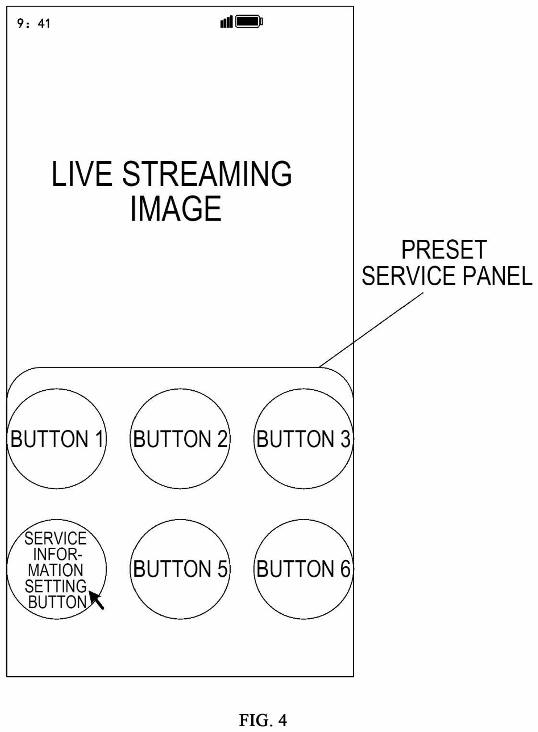

In actual applications, in order to better present the live streaming image of the live streaming room, the display state of the preset service panel in the live streaming room may be a stowed display state. The service panel present control may be preset previously, and the service panel present control is displayed at a preset position in the live streaming image of the live streaming room. Further, when the trigger operation for the service panel present control is detected, the trigger operation is responded, and the preset service panel is presented in the live streaming image of the live streaming room. Further, a plurality of preset live streaming service information setting buttons may be displayed in the preset service panel, and the service information setting button displayed in the preset service panel may be used as the entry trigger control. Further, the fourth trigger operation acting on the entry trigger control may be determined when the trigger operation acting on the service information setting button is detected. Thus, in response to the fourth trigger operation, the service information setting page is displayed. For example, as shown in FIG. 4, it is a schematic diagram of a preset service panel. The preset service panel may include 6 buttons, which are respectively a button 1, a button 2, a button 3, and a service information setting button, a button 5, and a button 6. The service information setting button may be used as the entry trigger control, and the service information setting page may be displayed when the mouse cursor (the arrow in the figure) inputs a trigger operation for the entry trigger control.

The third operation may be: displaying, in response to a fifth trigger operation for scenario service and in accordance with the triggered scenario service being a target service, an entry trigger control corresponding to the target service scenario.

The scenario service may be a service associated with the live streaming scenario. Optionally, the scenario service may include the live streaming interaction service, the information posting service, and the live streaming image processing service. The target service may be understood as a scenario service that may flexibly set service information. In this embodiment, a plurality of scenario services may be provided in the target service scenario, and these scenario services may include a scenario service that allows setting for service information, or may include a scenario service that does not allow setting for service information. The scenario service that allows setting for service information may be taken as a target service.

In a specific implementation, a plurality of scenario services associated with the live streaming scenario may be presented in a target display interface corresponding to the live streaming scenario. Further, after the trigger operation for any scenario service is detected, the triggered scenario service may be detected to determine whether the scenario service is the target service. Further, when it is determined that the triggered scenario service is the target service, the entry trigger control corresponding to the target service scenario may be displayed. Further, when the fourth trigger operation for the entry trigger control is detected, the fourth trigger operation is responded, and the service information setting page is displayed.

It should be noted that the advantage of displaying the service information setting page in a plurality of manners is that the diversity of the display manner of the service information setting page is enhanced, and meanwhile, the positive guidance of the platform to which the target service scenario belongs to the service information setting function is realized.

In actual applications, in order to prevent the service information of the scenario service from being set arbitrarily, the display trigger condition of the service information setting page may be preset. Further, after the first trigger operation for the target service scenario is detected, it may be determined whether the first trigger operation satisfies the display trigger condition. Therefore, the service information setting page may be displayed when it is determined that the first trigger operation satisfies the display trigger condition. The display trigger condition may be any trigger condition. Optionally, the display trigger condition may be that the operation permission corresponding to the request object of the first trigger operation is allowance for opening the service information setting page.

Optionally, displaying the service information setting page includes obtaining request object information corresponding to the first trigger operation, and determining an operation permission corresponding to the request object information; and displaying the service information setting page in accordance with that the operation permission allows to open the service information setting page.

The request object information may be understood as information representing identity information and permission information of the trigger operation request object. The operation permission may be understood as information representing whether the request object can perform related operations. In this embodiment, there are a plurality of manners for obtaining the request object information, for example, a manner of receiving an editing operation for obtaining a page for the request object information and obtaining the request object information in real time; or when the verification of identity of the request object succeeds, retrieving the corresponding request object information from the preset database.

Specifically, when the first trigger operation for the target service scenario is detected, the request object information obtaining page may be presented, and the request object information obtaining page may include a plurality of request object information editing items. Further, an editing operation for the request object information editing item is received, and a request object parameter corresponding to the request object information editing item is displayed. Then, when it is detected that the trigger operation is edited completely, according to the request object parameter displayed in the request object information obtaining page, the request object information corresponding to the first trigger operation is obtained. Alternatively, the manner for obtaining the request object information may further be the following manner: in the case that the first trigger operation inputted in the target service scenario is detected, a manner of retrieving the corresponding request object information from the preset database to obtain the request object information corresponding to the first trigger operation.

Further, after obtaining the request object information corresponding to the first trigger operation, the operation permission of the request object information for the service information setting operation may be determined. When the operation permission is allowance for opening the service information setting page, the service information setting page is displayed. The advantage of this arrangement is that the security of the service information setting function is enhanced, the occurrence of a situation that the service information is arbitrarily set may be effectively avoided, and the usage experience of the user is improved.

S120, in response to the second trigger operation for the restriction information setting item, a set restriction attribute value corresponding to the restriction information setting item is obtained, and the restriction attribute value is displayed.

The restriction information setting item may be understood as an interaction entry for setting service restriction information associated with the scenario service. In this embodiment, different scenario services may correspond to different restriction information setting items. Optionally, the restriction information setting item may include a resource setting item for setting restriction information corresponding to the service obtaining resource in the scenario service; and further includes a service state setting item for associating with the resource setting item. The second trigger operation may be an editing trigger operation for the restriction information setting item. The second trigger operation may include an information input operation and/or a state switching operation. The restriction attribute value may be specific setting information corresponding to the restriction information setting item. The restriction attribute value may represent a limitation of the restriction information setting item for the scenario service. Optionally, the restriction attribute value may represent a specific restriction value corresponding to the restriction information setting item; or may further represent whether the restriction state corresponding to the restriction information setting item is enabled.

In an actual application, when the displayed service information setting page displays the service information setting item associated with the at least one scenario service provided by the target service scenario, and the service information setting item includes at least the restriction information setting item, the second trigger operation may be inputted to the displayed restriction information setting item to set the restriction information associated with the scenario service. After that, when the second trigger operation for the restriction information setting item is received, the received second trigger operation may be responded, and the restriction information setting item corresponding to the second trigger operation may be determined. Further, the restriction attribute value corresponding to the restriction information setting item corresponding to the second trigger operation is obtained, that is, the set restriction attribute value corresponding to the restriction information setting item is obtained, and the obtained restriction attribute value is displayed in the corresponding restriction information display area. For example, with continued reference to FIG. 2, in response to the second trigger operation for the restriction information setting item, that is, in response to the second trigger operation for the resource setting item, the restriction attribute value corresponding to the resource setting item is obtained and displayed; and/or, in response to the second trigger operation for the service state setting item, the restriction attribute value corresponding to the service state setting item is obtained and displayed.

S130, in response to the third trigger operation, a service response manner corresponding to the scenario service is determined based on the restriction information setting item and the restriction attribute value.

The third trigger operation may be a setting completion operation for the restriction information setting item. In this embodiment, the information setting completion control may be preset, and the information setting completion control is displayed in the service information setting page. Further, when a trigger operation for the control is detected, it may be determined that the third trigger operation is detected.

The service response manner is used to generate service response data according to service request data corresponding to the scenario service. The service request data may be a request issued for each service associated with the scenario service. The service request data may be understood as a request for executing a certain item of service. Correspondingly, the service response data may be data generated when the received service request data is responded.

For example, when the scenario service is a live streaming gift interaction service, the service request data may include a request for sending a gift of the target resource value to the live streamer, and the service response manner indicates to set different response logic according to whether the target resource value exceeds the upper limit value when a request for sending a gift of the target resource value to the live streamer is received. For example, when the target resource value exceeds the upper limit value, target prompt information is displayed, and/or when the target resource value exceeds the upper limit value, the live streaming gift interaction service is set to an unavailable state. The service response data may be the request result data determined based on the service request data and the service response manner, for example, the target prompt information is displayed when the target resource value exceeds the upper limit value, and/or the live streaming gift interaction service is set to an unavailable state, for example, an unresponsive state.

It should be noted that, in the case that the restriction information setting item included in the service information setting page is set, it may be set according to the restriction requirement of the operation object corresponding to the trigger operation for the scenario service. Therefore, for the restriction information setting item included in the service information setting page, the restriction attribute value corresponding to some or all of the restriction information setting items may be set according to the restriction requirement. Therefore, the restriction information setting item satisfying the restriction requirement and the corresponding restriction attribute value can be obtained.

In an actual application, when the third trigger operation is detected, the third trigger operation may be responded to, and the restriction information setting item included in the service information setting page and the restriction attribute value corresponding to each restriction information setting item may be determined. Further, the service response manner corresponding to the scenario service may be determined according to the restriction information setting item and the restriction attribute value displayed in the service information setting page.

It should be noted that the determination basis of the service response manner corresponding to the scenario service may be all restriction information setting items and corresponding restriction attribute values displayed in the service information setting page. Therefore, the response basis of the service response manner may include both the restriction attribute value corresponding to the restriction information setting item set by the operation object corresponding to the trigger operation and the restriction attribute value corresponding to the restriction information setting item not set by the operation object.

According to the technical solution of embodiments of the present disclosure, the service information setting page is displayed in response to the first trigger operation inputted in the target service scenario, where the service information setting page displays the service information setting item associated with the at least one scenario service provided by the target service scenario, and the service information setting item at least includes the restriction information setting item. The setting function for the service information can be provided for the user, the restriction information setting item is visually displayed, and the interaction entry for setting the restriction information is provided for the user. Further, in response to the second trigger operation for the restriction information setting item, the set restriction attribute value corresponding to the restriction information setting item is obtained, the restriction attribute value is displayed, the flexible setting by the user for the restriction information is supported, the restriction attribute value is displayed, the user can clearly and intuitively know the setting situation of the restriction information. And finally, in response to the third trigger operation, the service response manner corresponding to the scenario service is determined based on the restriction information setting item and the restriction attribute value, the technical problems of system resource occupation, large pressure of data processing, reduced processing efficiency and tedious service revocation processing program due to service revocation in the related technology are solved, the effect of flexibility setting for the restriction information of the scenario service is achieved, the standardization of the scenario service interaction operation is improved, and the interaction experience of the user in the target service scenario is improved.

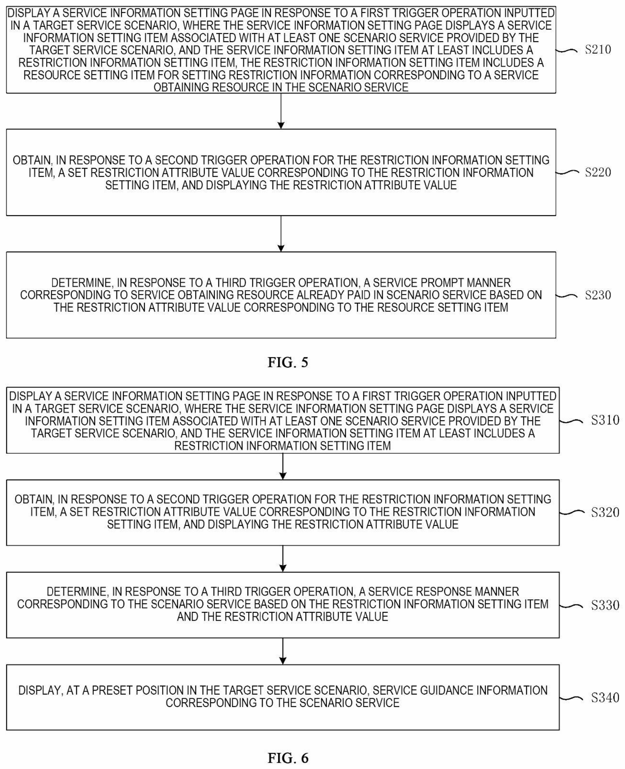

FIG. 5 is a schematic flowchart of another method for scenario service interaction according to an embodiment of the present disclosure. Based on the foregoing embodiment, the technical solution of this embodiment further refines how to determine the service response manner. Optionally, determining the service response manner corresponding to the scenario service based on the restriction information setting item and the restriction attribute value includes: determining, based on the restriction attribute value corresponding to the resource setting item, a resource prompt manner corresponding to the service obtaining resource already paid in the scenario service. For a specific implementation, reference may be made to the description of this embodiment. Technical features that are the same as or similar to the foregoing embodiments are not described herein again.

As shown in FIG. 5, the method in this embodiment may specifically include:
S210, a service information setting page is displayed in response to a first trigger operation inputted in a target service scenario, where the service information setting page displays a service information setting item associated with at least one scenario service provided by the target service scenario, and the service information setting item at least includes a restriction information setting item, and the restriction information setting item includes a resource setting item for setting restriction information corresponding to a service obtaining resource in the scenario service.

In this embodiment, the resource may be understood as a virtual resource, for example, a deduction voucher. Specifically, the resource may be a virtual resource used to obtain a service or a commodity or a physical object. The service obtaining resource may be understood as a resource required for obtaining a response service. The resource setting item may be understood as an interaction entry for setting the restriction information corresponding to the service obtaining resource. The restriction information corresponding to the service obtaining resource may be understood as a service restriction condition associated with the service obtaining resource. Taking the target service scenario being a live streaming scenario and the scenario service being a live streaming interaction service as the example, a specific introduction is made: in the live streaming scenario, service information corresponding to the live streaming interaction service in the live streaming scenario may be set. The live interaction service may include a plurality of interaction objects (for example, interaction gifts) to be used. In the live streaming interaction service, the service obtaining resource may be understood as a resource required to be paid for obtaining the interaction object, or may be understood as a resource value transferred to the interaction object provider. The resource value is used for how much the resource amount is. The restriction information corresponding to the service obtaining resource may be understood as an upper limit value and/or a lower limit value of the transferred resource value. Optionally, the restriction information corresponding to the service obtaining resource may be an upper limit value and/or a lower limit value of a resource value of a single transition; or may be an upper limit value of a sum of resource values of multiple transfers, and the like.

In an actual application, when the first trigger operation inputted in the target service scenario is detected, the first trigger operation may be responded, and the service information setting page may be displayed. The service information setting page may display a service information setting item associated with at least one scenario service provided by the target service scenario, the service information setting item may include a restriction information setting item, and the restriction information setting item may include a resource setting item of the restriction information corresponding to the service obtaining resource in the scenario service. Further, the resource setting item displayed in the service information setting page may be set to obtain the restriction attribute value corresponding to the set resource setting item.

S220, in response to the second trigger operation for the restriction information setting item, a set restriction attribute value corresponding to the restriction information setting item is obtained, and the restriction attribute value is displayed.

S230: in response to the third trigger operation, a resource prompt manner corresponding to the service obtaining resource already paid in the scenario service is determined based on the restriction attribute value corresponding to the resource setting item.

In this embodiment, the restriction attribute value may be understood as a value specifically set for the resource setting item. For example, when the target service scenario is a live streaming scenario and the scenario service is a live streaming interaction service, the restriction attribute value may be understood as an upper limit value and/or a lower limit value of a resource value set completely. The resource prompting manner may be understood as being used to generate response data according to the service obtaining resource already paid. The resource prompt manner may include a resource prompt trigger threshold and resource prompt presentation information. The resource prompt trigger threshold may be understood as the service obtaining resource threshold required for triggering the resource prompt, that is, when the service obtaining resource already paid reaches the resource prompt trigger threshold, the resource prompt may be generated. The resource prompt presentation information may be understood as information representing a resource prompt display situation. Optionally, the resource prompt presentation information may include at least one of a resource prompt presentation content, a resource prompt presentation duration, a resource prompt presentation form, and a resource prompt presentation position. The resource prompt display content may be understood as the prompt content displayed by the resource prompt, that is, the resource prompt information specifically presented in the display interface. The resource prompt display content may be a text display content, a picture display content, a speech display content, or the like, which is not specifically limited in embodiments of the present disclosure. The resource prompt presentation duration may be a duration in which the resource prompt presentation content is displayed in the display interface. The resource prompt presentation form may be a presentation form of the resource prompt presentation content. Optionally, the resource prompt presentation form may include a visual presentation form, a speech presentation form, or the like. The resource prompt display position may be a display position of the resource prompt display content in the display interface.

In an actual application, when a resource setting item is included in the service information setting page, after the second trigger operation for the display resource setting item is detected, the second trigger operation may be responded, and the set restriction attribute value corresponding to the resource setting item may be obtained and displayed. Further, after the third trigger operation is detected, the third trigger operation may be responded, and the resource prompt manner corresponding to the service obtaining resource already paid in the scenario service is determined according to the resource setting item included in the service information setting page and the restriction attribute value corresponding to the resource setting item.

In actual applications, after the resource prompt manner is determined, the restriction information corresponding to the service obtaining resource in the scenario service may be limited. In the target service scenario, when it is detected that the service request data for the scenario service associated in the target service scenario includes the service obtaining resource already paid, and the service obtaining resource already paid satisfies the restriction information trigger condition, the service request data may be responded according to the resource prompt manner.

Based on this, after the resource prompt manner corresponding to the service obtaining resource already paid in the scenario service is determined based on the restriction attribute value corresponding to the resource setting item, the solution further includes:

When the service request data includes the service obtaining resource and it is detected that the service obtaining resource reaches the resource prompt trigger threshold, the target resource prompt information is generated, and the target resource prompt information is displayed in a preset presentation manner.

The resource prompt trigger threshold may include a single resource prompt threshold and/or a total resource prompt trigger threshold. The single resource prompt threshold may be understood as a threshold limited for prompting service obtaining resources included in the single service request data. The total resource prompt trigger threshold may be understood as a threshold limited for prompting a sum of service obtaining resources already paid in the target service scenario. The target resource prompt information may be understood as resource prompt information generated for a service obtaining resource included in the service request data. The preset display manner may be understood as a preset resource prompt information presentation manner.

In an actual application, when the service request data for the scenario service is received, the data included in the service request data may be detected. Further, after it being determined that the service request data includes the service obtaining resource, whether the service obtaining resource reaches the resource prompt trigger threshold may be detected. Further, when it is detected that the service obtaining resource included in the service request data reaches the resource prompt trigger threshold, the target resource prompt information may be generated, and the target resource prompt information may be displayed in a preset presentation manner. The advantage of this arrangement is that the effect of reminding the service obtaining resources already paid in the target service scenario in stages is achieved, and then the user can clearly and intuitively know the current stage of paying the resource, so that the effect of standardizing the behavior of the subsequently sending the service request data according to the target resource prompt information can be achieved.

It should be noted that the resource prompt trigger threshold may include a single resource prompt trigger threshold and/or a total resource prompt trigger threshold. Therefore, in two cases that the service obtaining resources included in the service request data reach the single resource prompt trigger threshold and reach the total resource prompt trigger threshold, the corresponding target resource prompt information is different, and the preset presentation manner of the target resource prompt information may also be different. The two cases in which the service obtaining resource triggers the single resource prompt trigger threshold and the service obtaining resource triggers the total resource prompt trigger threshold may be separately described below.

Optionally, when the service request data includes the service obtaining resource and it is detected that the current service obtaining resource to be paid reaches a single resource prompt trigger threshold, a single resource prompt information is generated, and the single resource prompt information is displayed in a first preset manner.

The current service obtaining resource to be paid may be understood as a service obtaining resource included in the currently received service request data. The first preset manner may be a preset manner for presenting the single resource prompt information.

In actual applications, when the service request data is received and it is determined that the service request data includes the service obtaining resource and it is detected that the current service obtaining resource to be paid reaches a single resource prompt trigger threshold, it can be determined that the currently received service request data triggers the single resource prompt manner. Further, the single resource prompt information may be generated according to the current service obtaining resource to be paid and the determined resource prompt manner, and the single resource prompt information may be presented in the first preset manner.

Optionally, when the service request data includes the service obtaining resource and it is detected that the sum of the current service obtaining resource to be paid in the target service scenario and the service obtaining resource already paid reaches the total resource prompt trigger threshold, the total resource prompt information is generated, and the total resource prompt information is displayed in the second preset manner.

The service obtaining resource already paid may be understood as a service obtaining resource that the request object has paid in the target service scenario within a period of time before the current moment. The second preset manner may be a preset manner for presenting the total resource prompt information.

In actual applications, when it is determined that the received service obtaining data includes the service obtaining resource, and it is detected that the sum of the current service obtaining resource to be paid and the service obtaining resource already paid in the target service scenario reaches the total resource prompt trigger threshold, it can be determined that the currently received service request data triggers the total resource prompt manner. Further, the total resource prompt information may be generated according to the sum of the current service obtaining resource to be paid and the service obtaining resource already paid and the predetermined resource prompt manner, and the total resource prompt information is presented in the second preset manner.

For example, taking the target service scenario as a live streaming scenario and taking the scenario service as a live streaming interaction service as an example, the foregoing process is specifically described: in a live streaming scenario, for a live streaming interaction service, a plurality of interaction objects to be used may be included. When it is detected that the resource value transferred to the interaction object provider single time reaches the preset upper limit value of the preset resource value transferred single time, single resource prompt information may be generated and presented. The single resource prompt information may include information about a resource value that is currently to be transferred exceeds an upper limit value of the resource value transferred single time. When it is detected that the sum of the resource values transferred to the interaction object provider multiple times reaches the upper limit value of the sum of the preset resource values transferred multiple times, the total resource prompt information can be generated and presented. The total resource prompt information may include information about an upper limit value of a sum of the current resource value to be transferred and the resource value already transferred exceeding a sum of the resource values transferred multiple times.

In actual applications, the preset display manner for presenting the target resource prompt information may include various manners, for example, visual display and/or speech display. Optionally, displaying the target resource prompt information in the preset presentation manner includes displaying the visual resource prompt information in a current display interface with the target service scenario when the target resource prompt information includes visual resource prompt information.

The visual resource prompt information may be understood as resource prompt information displayed in the display interface. The visual resource prompt information may include various forms for prompt information presentation. Optionally, text visual prompt information, picture visual prompt information, animation visual prompt information, and the like may be included. The current display interface of the target service scenario may be understood as a display interface presenting the target service scenario.

In actual applications, after the target resource prompt information is generated, the target resource prompt information may be detected. Further, when it is detected that the target resource prompt information includes visual resource prompt information, the visual prompt information may be visually presented to present the visual prompt information in the current display interface of the target service scenario.

Optionally, displaying the target resource prompt information in the preset presentation manner includes playing the sound prompt information when the target resource prompt information includes the sound prompt information.

The sound prompt information may be understood as prompt information in a form of speech, or may be understood as a piece of audio, and the audio includes resource prompt information.

In actual applications, when it is detected that the generated target resource prompt information includes the sound prompt information, the sound prompt information may be played according to the sound playback apparatus of the terminal device to which the target service scenario belongs.

In actual applications, when the service obtaining resource in the service request data reaches the resource prompt trigger threshold, in order to facilitate the user to intuitively and clearly understand the proportion of the service obtaining resource in the current service request data to the restriction attribute value corresponding to the set resource setting item, the resource prompt trigger threshold may be determined as multiple thresholds according to a preset proportion. Therefore, the effect of performing resource prompt in stages according to the resource prompt triggering threshold can be achieved.

Optionally, determining the resource prompt triggering threshold corresponding to the service obtaining resource already paid in the scenario service based on the restriction attribute value corresponding to the resource setting item includes multiplying the restriction attribute value corresponding to the resource setting item by a preset number of preset proportions respectively, to obtain the preset number of resource prompt trigger thresholds corresponding to the service obtaining resource already paid in the scenario service.

The preset number may be a preset proportion number. The preset number may be any value, and optionally, may be 4 or 5. The preset proportion may be a preset resource prompt proportion. The preset proportion may be any value, optionally, may be 25%, 50%, 75%, 100%, or 200%. The restriction attribute value corresponding to the resource setting item may be understood as a maximum limit value of the service obtaining resource of the scenario service, that is, a maximum resource value that can be paid in the scenario service.

In actual applications, the preset number of preset proportions may be predetermined. Further, the preset number of preset proportions may be respectively multiplied by the restriction attribute values corresponding to the set resource setting items. Further, a preset number of resource prompt trigger thresholds corresponding to service obtaining resources already paid in the scenario service may be obtained. The method has the advantages that the paying stage of the service obtaining resource may be reminded in stages, so that the current resource paying stage of the user is reminded, and the flexibility of setting the restriction information is improved.

For example, the restriction attribute value corresponding to the resource setting item may be 1000, the preset number may be 5, and the preset proportion may be 25%, 50%, 75%, 100%, and 200%, respectively. After the preset number of preset proportions are respectively multiplied by the restriction attribute values, the preset number of resource prompt trigger thresholds may be obtained, which are 250, 500, 700, 1000 and 2000 respectively.

In actual applications, the restriction information setting item further includes a service state setting item for being associated with the resource setting item. Optionally, determining the service response manner corresponding to the scenario service based on the restriction information setting item and the restriction attribute value includes determining a response restriction manner corresponding to the service request data based on the restriction attribute value corresponding to the service state setting item and the restriction attribute value corresponding to the resource setting item.

The service state setting item may be understood as an interaction entry for setting a service state corresponding to the scenario service. In this embodiment, the service state corresponding to the scenario service may be enabling related service or a disabling related service. Optionally, the restriction attribute value corresponding to the service state setting item may include two attribute values of enabling or disabling. For example, it is taken as an example for description that the target service scenario is a live streaming scenario, in a live streaming scenario, a plurality of scenario services may be included, for example, a live streaming interaction service, a live streaming comment service, and a live streaming sharing service. For the live interaction service, the service state setting item may be understood as an interaction entry for setting whether to enable the resource prompt function. When the restriction attribute value corresponding to the service state setting item is enabled, when it is detected that the transferred resource value reaches the upper limit value and/or the lower limit value of the preset resource value, resource prompt information may be generated and presented. When the restriction attribute value corresponding to the service state setting item is not enabled, when it is detected that the transferred resource value reaches the upper limit value and/or the lower limit value of the preset resource value, no resource prompt information is generated.

The response restriction manner may be understood as a corresponding response manner when responding to the service request data. The response limit manner includes at least one of normally responding, delaying a response, and prohibiting a response. Normally responding may be understood as responding to the service request data immediately when the service request data is received. Delaying a response may be understood as responding to the service request data after a period of time when the service request data is received. Prohibiting a response may be understood as not responding to the service request data when the service request data is received.

In actual applications, in addition to the resource setting item, the service setting page may further include a service state setting item associated with the resource setting item. After the restriction attribute value corresponding to the resource setting item is determined, the service state setting item may be set, and the restriction attribute value corresponding to the service state setting item may be determined. Further, the response restriction manner corresponding to the service request data may be determined according to the restriction attribute value corresponding to the service state setting item and the restriction attribute value corresponding to the set resource setting item. This arrangement has the advantages that the effect of systematic management and control for the service request data is achieved, and the effect of standardized management and control for the behavior of sending the service request data is achieved.

It should be noted that, when the restriction attribute value corresponding to the service state setting item is the unopened service, the response restriction manner corresponding to the service request data is irrelevant to the restriction attribute value corresponding to the resource setting item, that is, when the service obtaining resource included in the service request data exceeds the restriction attribute value, the service request data is still normally responded. In contrast, when the restriction attribute value corresponding to the service state setting item is the opened service, the response restriction manner corresponding to the service request data is associated with the restriction attribute value corresponding to the resource setting item, that is, the response restriction manner corresponding to the service request data may be determined according to the proportion between the service obtaining resource included in the service request data and the restriction attribute value corresponding to the resource setting item.

In actual applications, after the response limit manner corresponding to the service request data is determined, the received service request data may be responded based on the determined response limit manner.

Based on this, after determining, based on the resource setting item and the restriction attribute value corresponding to the resource setting item, the resource prompt manner corresponding to the service obtaining resource already paid in the scenario service, the solution further includes generating service response prompt information corresponding to the service request data, and prohibiting a repsonse or delaying a response to the service request data in accordance with detecting that the service obtaining resource in the scenario service has reached the restriction attribute value corresponding to the resource setting item.

The service response prompt information may be understood as prompt information for prohibiting the response or delaying the response to the service request data. The service response prompt information may include query information about whether to respond to the service request data; or may include a specific cause for prohibiting the current response to the service request data.

In an actual application, when the service request data is received and it is detected that the service obtaining resource in the scenario service has reached the restriction attribute value corresponding to the resource setting item, the service response prompt information corresponding to the service request data may be generated according to that the service obtaining resource in the scenario service exceeding the value of the restriction attribute value corresponding to the resource setting item, and delaying a response or prohibiting a response is perform for the service request data. The advantage of this arrangement is that the platform to which the target service scenario belongs is reflected for the standardization management of the over-paid service obtaining resource, so that the request object sending the service request data can be subjected to resource exceeding prompt, so that the request object performs secondary confirmation on whether to send the service request data; meanwhile, the request object of the over-paid service obtaining resource in the scenario service can also be strongly blocked, so as to reduce the occurrence rate of the mis-operation of the request object.

It should be noted that, when the service obtaining resource in the scenario service exceeds the value of the restriction attribute value corresponding to the resource setting item and the excess value is relatively small, delaying a response may be performed for the service request data; and when the service obtaining resource in the scenario service exceeds the value of the restriction attribute value corresponding to the resource setting item and the excess value is relatively large, prohibiting a response may be performed for the service request data. The advantage of this arrangement is that the request object sending the service request data can be subjected to resource exceeding prompt, so that the request object performs secondary confirmation on whether to send the service request data; meanwhile, the request object of the service obtaining resource in the scenario service can also be strongly blocked, so as to reduce the occurrence rate of the mis-operation of the request object.

According to the technical solution of embodiments of the present disclosure, the service information setting page is displayed in response to the first trigger operation inputted in the target service scene, where the service information setting page displays a service information setting item associated with at least one scenario service provided by the target service scenario, and the service information setting item at least includes a restriction information setting item, and the restriction information setting item includes a resource setting item used for setting restriction information corresponding to the service obtaining resource in the scenario service. Further, in response to the second trigger operation for the restriction information setting item, the set restriction attribute value corresponding to the restriction information setting item is obtained, and the restriction attribute value is displayed. And finally, in response to the third trigger operation, the resource prompt manner corresponding to the service obtaining resource already paid in the scenario service is determined based on the restriction attribute value corresponding to the resource setting item. So that the effect of setting the flexibility of the resource setting item of the scenario service is achieved. Further, the specification degree of the service obtaining resource paying operation in the target service scene is improved, and the perception degree of the user on the service obtaining resource paying process is improved.

FIG. 6 is a schematic flowchart of another method for scenario service interaction according to an embodiment of the present disclosure. Based on the foregoing embodiments, the technical solution of this embodiment displays service guidance information. Optionally, the method further includes displaying service guidance information corresponding to the scenario service at a preset position in the target service scenario. For a specific implementation, reference may be made to the description of this embodiment. Technical features that are the same as or similar to the foregoing embodiments are not described herein again.

As shown in FIG. 6, the method in this embodiment may specifically include:
S310, a service information setting page is displayed in response to a first trigger operation inputted in a target service scenario, where the service information setting page displays a service information setting item associated with at least one scenario service provided by the target service scenario, and the service information setting item includes at least a restriction information setting item.
S320, in response to the second trigger operation for the restriction information setting item, a set restriction attribute value corresponding to the restriction information setting item is obtained, and the restriction attribute value is displayed.
S330, in response to the third trigger operation, a service response manner corresponding to the scenario service is determined based on the restriction information setting item and the restriction attribute value.
S340, service guidance information corresponding to the scenario service is displayed at a preset position in the target service scenario.

In this embodiment, the preset position may be understood as a preset display position corresponding to the service guidance information. The preset position may be any position in the target service scenario display interface, optionally, may be a top position, a middle position, or a top position, or the like. The service guidance information may be understood as positive forward guidance information associated with the scenario service. The service guidance information may represent a responsible feeling and a positive image of a platform to which the target service scenario belongs.

In an actual application, a display interface of the target service scenario may be displayed when a display trigger operation for the target service scenario is detected. Further, in order to convey the positive guidance attitude of the platform to which the target service scenario belongs to the scenario service associated with the target service scenario, the service guidance information corresponding to the scenario service may be displayed at a preset position in the target service scenario.

In an actual application, the service guidance information corresponds to a target service scenario and a scenario service associated with the target service scenario, and for different target service scenarios or different scenario services in a same target service scenario, display manners and/or display positions of corresponding service guidance information may be different. In this embodiment, when the target service scenario includes a live streaming scenario and the scenario service includes a live streaming interaction service, there are a plurality of display manners and/or display positions of the service guiding information, for example, it may be displayed in a form of a message prompt box or an animation in the target display area, or may be displayed in a picture form in the information posting area.

Optionally, displaying the service guidance information corresponding to the scenario service at the preset position in the target service scenario includes displaying, in response to an entry trigger operation for the target live streaming room, service guidance information corresponding to the live streaming interaction service in form of a message prompt box or an animation in a target display area of the target live streaming room.

The target live streaming room may be understood as a live streaming room of the service guidance information to be displayed. The target live streaming room may be any live streaming room in the live streaming scenario. Optionally, the target live streaming room may be a live streaming room that is entered for the first time within a preset time period; or, each entered live streaming room within a preset time period; or one or more live streaming rooms randomly selected from a plurality of live streaming rooms that are entered within a preset time period; or a part of live streaming rooms selected according to a preset rule (for example, a preset number of live streaming rooms per interval, etc.). In this embodiment, the entry trigger operation for the target live streaming room may be a click operation for the target live streaming room. The click operation may be a single-click operation or a multiple-click operation (for example, a double-click operation, etc. ); in order to facilitate the operation of the user, for the entry trigger operation of the target live streaming room, it may also be that, when it is detected that the pause duration of the user on the target live streaming room based on the input device or the touch point reaches the preset duration, the operation may be taken as the entry trigger operation for the target live streaming room, and the operation is responded; or, for the entry trigger operation of the target live streaming room, it may also be that, when it is detected that the presentation duration of the scenario preview interface of the target live streaming room on the display interface of the terminal device reaches the preset presentation duration, the operation may be taken as the entry trigger operation for the target live streaming room, and the operation is responded.

In this embodiment, the target display area may be a display area of predetermined service guidance information. The target display area may be any display area in the target live streaming room, optionally, it may include top display area, middle display area, or bottom display area or the like. The message prompt box may be a text box, and the text box includes service guidance information corresponding to the scenario service.

In actual applications, when an entry trigger operation for the target live streaming room is checked, the entry trigger operation may be responded and entered into the target live streaming room. Then, the service guidance information corresponding to the live streaming interaction service may be displayed in a form of a message prompt box or an animation in the target display area of the target live streaming room.

Further, when it is detected that the display duration of the service guidance information reaches the preset duration, the live streaming image of the target live streaming room may be displayed; or, when the live streaming image of the target live streaming room is displayed, the service guidance information is displayed in the corresponding form in the target display area until the display duration of the service guidance information reaches the preset duration, and then the service guidance information disappears in the target display area to normally display the live streaming image of the target live streaming room.

It should be noted that the display duration of the service guidance information in the target display area may be preset, and the first display duration displayed in the form of the message prompt box may be different from the second display duration displayed in the form of the animation, or certainly may be the same. In order to prevent the service guidance information from being displayed abnormally in the target live streaming room, the user cannot set the display duration or the display state of the service guidance information. In an actual application process, for the service guidance information displayed in the form of a message prompt box, when it is detected that the display duration of the service guidance information in the target display area reaches the first display duration, the service guidance information disappears in the target display area; similarly, for the service guidance information displayed in an form of the animation, when it is detected that the display duration of the service guidance information in the target display area reaches the second display duration, the service guidance information disappears in the target display area.

It should be further noted that the display form of the service guidance information in the target display area may be set by the system, or may be customized by the user, which is not limited in embodiments according to the present disclosure.

Optionally, displaying the service guidance information corresponding to the scenario service at the preset position in the target service scenario includes displaying, in the information posting area of the target live streaming room, service guidance information corresponding to the live streaming interaction service in a form of a picture.

The information posting area may be understood as an area in the live streaming room for displaying the live streaming interaction information. In the process of watching the target live streaming room, the interaction viewing end corresponding to the target live streaming room may send the interaction information to the target live streaming room, so that the interaction information sent by the interaction viewing end may be displayed in the information posting area of the target live streaming room. The information posting area may be any area in the target live streaming room, and in order to not affect the live streaming screen display effect of the target live streaming room, the information posting area may be a bottom area in the target live streaming room, or certainly, may also be another area in the target live streaming room, which is not specifically limited in the embodiments of the present disclosure.

In practical applications, when it is detected that an entry trigger operation for the target live streaming room is detected, the live streaming image of the target live streaming room may be displayed, and the information posting area of the target live streaming room may be displayed. Further, in the information posting area of the target live streaming room, the service guidance information corresponding to the live streaming interaction service may be displayed in the form of a picture. It should be noted that the display duration of the service guidance information is associated with the information update speed in the information posting area, that is, when the information update speed in the information posting area is relatively fast, the display duration of the service guidance information may be relatively short; and in the case that the information update speed in the information posting area is relatively slow, the display duration of the service guidance information may be relatively long.

According to the technical solution of embodiments of the present disclosure, the service information setting page is displayed in response to the first trigger operation inputted in the target service scene, where the service information setting page displays the service information setting item associated with the at least one scenario service provided by the target service scenario, and the service information setting item at least includes the restriction information setting item. Further, in response to the second trigger operation for the restriction information setting item, the set restriction attribute value corresponding to the restriction information setting item is obtained, and the restriction attribute value is displayed. Furthermore, in response to the third trigger operation, the service response manner corresponding to the scenario service is determined based on the restriction information setting item and the restriction attribute value, and finally, the service guidance information corresponding to the scenario service is displayed at the preset position in the target service scenario. So that the effect of conveying the forward guidance attitude of the platform to which the target service scene belongs to the scenario service associated with the target service scene is achieved, and the trust degree of the user on the platform as well as the use experience are improved.

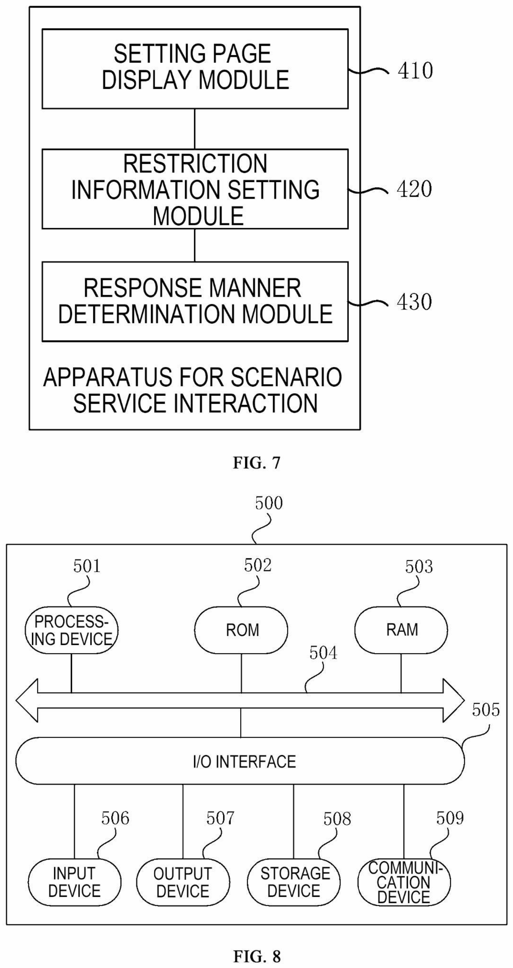

FIG. 7 is a schematic structural diagram of an apparatus for a scenario service interaction according to an embodiment of the present disclosure. The apparatus includes a setting page display module 410, a restriction information setting module 420 and response manner determination module 430.

The setting page display module 410 is configured to display a service information setting page in response to a first trigger operation inputted in a target service scenario, where the service information setting page displays a service information setting item associated with at least one scenario service provided by the target service scenario, and the service information setting item at least includes a restriction information setting item; a restriction information setting module 420 is configured to obtain, in response to a second trigger operation for the restriction information setting item, a set restriction attribute value corresponding to the restriction information setting item, and display the restriction attribute value; and a response manner determination module 430 is configured to determine, in response to a third trigger operation, a service response manner corresponding to the scenario service based on the restriction information setting item and the restriction attribute value, where the service response manner is configured to generate service response data according to service request data corresponding to the scenario service.

On the basis of the foregoing technical solutions, the restriction information setting item includes a resource setting item for setting restriction information corresponding to a service obtaining resource in the scenario service. Optionally, the response manner determination module 430 is specifically configured to determine, based on the restriction attribute value corresponding to the resource setting item, a resource prompt manner corresponding to the service obtaining resource already paid in the scenario service, where the resource prompt manner includes a resource prompt trigger threshold and resource prompt presentation information.

Based on the foregoing technical solutions, the apparatus further includes: a resource prompt information generation module. The resource prompt information generation module is configured to generate target resource prompt information and present the target resource prompt information in a preset presentation manner, in accordance with the service request data includes a service obtaining resource and detects that the service obtaining resource reaches the resource prompt trigger threshold after the resource prompt manner corresponding to the service obtaining resource already paid in the scenario service is determined based on the restriction attribute value corresponding to the resource setting item.

Based on the foregoing technical solutions, the resource prompt information generation module includes a visual resource prompt information display unit and/or a sound prompt information playback unit.

The visual resource prompt information display unit is configured to display, in accordance with the target resource prompt information including visual resource prompt information, the visual resource prompt information in a current display interface for the target service scenario; and a sound prompt information playback unit is configured to play sound prompt information in accordance with the target resource prompt information including the sound prompt information.

Based on the foregoing technical solutions, the response manner determination module 430 includes a resource prompt triggering threshold determination unit. The resource prompt triggering threshold determination unit is configured to multiply the restriction attribute value corresponding to the resource setting item by a preset number of preset proportions respectively, to obtain the preset number of resource prompt trigger thresholds corresponding to the service obtaining resource already paid in the scenario service.

Based on the foregoing technical solutions, the restriction information setting item further includes a service state setting item for being associated with the resource setting item.

Optionally, the response manner determination module 430 includes a response restriction manner determination unit. The response restriction manner determination unit is configured to determine a response restriction manner corresponding to the service request data based on the restriction attribute value corresponding to the service state setting item and the restriction attribute value corresponding to the resource setting item, where the response restriction manner includes at least one of normally responding, delaying a response, and prohibiting a response.

Based on the foregoing technical solutions, the apparatus further includes a service response prompt information generation module. The service response prompt information generation module is configured to generate service response prompt information corresponding to the service request data, and prohibiting a repsonse or delaying a response to the service request data, in accordance with detecting that the service obtaining resource in the scenario service has reached the restriction attribute value corresponding to the resource setting item after the resource prompt manner corresponding to the service obtaining resource that has been paid out in the scenario service is determined based on the resource setting item and the restriction attribute value corresponding to the resource setting item,.

Based on the foregoing technical solutions, the setting page display module 410 includes a trigger operation response unit. The trigger operation response unit is configured to respond to a fourth trigger operation acting on a preset entry trigger control corresponding to the target service scenario, where the entry trigger control is dynamically or statically displayed in a target display interface of the target service scenario.

Based on the foregoing technical solutions, the target service scenario may be a live streaming scenario.

Optionally, the apparatus further includes a hyperlink display module, a service information setting button display module, and an entry trigger control display module.

The hyperlink display module is configured to before responding to the fourth trigger operation acting on the preset entry trigger control corresponding to the target service scenario, display a preset entry hyperlink in a live streaming image of a target live streaming room, and use the preset entry hyperlink as an entry trigger control; a service information setting button display module is configured to display a service information setting button in a preset service panel of the target live streaming room, and use the service information setting button as an entry trigger control; an entry trigger control display module is configured to display, in response to a fifth trigger operation for the scenario service and in accordance with the triggered scenario service being a target service, an entry trigger control corresponding to the target service scenario.

Based on the foregoing technical solutions, the setting page display module 410 includes an operation permission determination unit and a service information setting page display unit.

The operation permission determining unit is configured to obtain request object information corresponding to the first trigger operation, and determine an operation permission corresponding to the request object information; and a service information setting page display unit is configured to display the service information setting page in accordance with that the operation permission allows to open the service information setting page.

Based on the foregoing technical solutions, the apparatus further includes a service guidance information display module. The service guidance information display module is configured to display, at a preset position in the target service scenario, service guidance information corresponding to the scenario service.

Based on the foregoing technical solutions, the target service scenario may include a live streaming scenario, and the scenario service may include a live streaming interaction service.

Optionally, the service guidance information display module includes: a service guidance information first display unit and/or a service guidance information second display unit.

The service guidance information first display unit is configured to display, in response to an entry trigger operation for a target live streaming room, service guidance information corresponding to the live streaming interaction service at a target display area of the target live streaming room in a form of a message prompt box or an animation, where the target display area includes a top display area, a middle display area, or a bottom display area; and the service guidance information second display unit is configured to display, in an information posting area of a target live streaming room, service guidance information corresponding to the live streaming interaction service in a form of a picture message.

According to the technical solution of the embodiment of the present disclosure, the service information setting page is displayed in response to the first trigger operation inputted in the target service scenario, where the service information setting page displays the service information setting item associated with the at least one scenario service provided by the target service scenario, and the service information setting item at least includes the restriction information setting item, the setting function of the service information can be provided for the user, the restriction information setting item can be visually displayed, and the interaction entry for setting the restriction information is provided for the user. Further, in response to the second trigger operation for the restriction information setting item, the set restriction attribute value corresponding to the restriction information setting item is obtained, the restriction attribute value is displayed, the flexible setting of the restriction information by the user is supported, the restriction attribute value is displayed, and the user can clearly and intuitively know the setting condition of the restriction information. And finally, in response to the third trigger operation, the service response manner corresponding to the scenario service is determined based on the restriction information setting item and the restriction attribute value, the technical problems of system resource occupation, large data processing pressure, reduced processing efficiency and tedious service revocation processing program in the related technology are solved, the effect of flexibility setting of the restriction information of the scenario service is achieved, the standardization of the scenario service interaction operation is improved, and the interaction experience of the user in the target service scene is improved.

The interaction apparatus for the scenario service provided in the embodiments of the present disclosure may perform the method for scenario service interaction provided in any embodiment of the present disclosure, and has corresponding function modules and beneficial effects of the execution method.

It should be noted that, the units and modules included in the foregoing apparatus are only divided according to a function manner, but are not limited to the foregoing division, as long as a corresponding function can be implemented; in addition, specific names of each function unit are merely for ease of distinguishing, and are not used to limit the protection scope of the embodiments of the present disclosure.

FIG. 8 is a schematic structural diagram of an electronic device according to an embodiment of the present disclosure. FIG. 8 is a schematic structural diagram of an electronic device (such as the terminal device or server in FIG. 8) suitable for implementing the embodiments of the present disclosure. The terminal device in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), an in-vehicle terminal (for example, an in-vehicle navigation terminal), and a fixed terminal such as a digital TV, a desktop computer, or the like. The electronic device shown in FIG. 8 is merely an example, and should not impose any limitation on the functions and scope of use of the embodiments of the present disclosure.

As shown in FIG. 8, the electronic device 500 may include a processing device (for example, a central processing unit, a graphics processor, etc.) 501, which may perform various appropriate actions and processing according to a program stored in a read-only memory (ROM) 502 or a program loaded into a random access memory (RAM) 503 from a storage device 508. In the RAM 503, various programs and data required by the operation of the electronic device 500 are also stored. The processing device 501, the ROM 502, and the RAM 503 are connected to each other through a bus 504. An edit/output (I/O) interface 505 is also connected to the bus 504.

Generally, the following devices may be connected to the I/O interface 505: an input device 506 including, for example, a touch screen, a touchpad, a keyboard, a mouse, a camera, a microphone, an accelerometer, a gyroscope, etc. ; an output device 507 including, for example, a liquid crystal display (LCD), a speaker, a vibrator, etc. ; a storage device 508 including, for example, a magnetic tape, a hard disk, etc. ; and a communication device 509. The communication device 509 may allow the electronic device 500 to communicate wirelessly or wired with other devices to exchange data. While FIG. 8 shows an electronic device 500 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product including a computer program embodied on a non-transitory computer readable medium, the computer program including program code for performing the method shown in the flowchart. In such embodiments, the computer program may be downloaded and installed from the network through the communication device 509, or installed from the storage device 508, or from the ROM 502. When the computer program is executed by the processing apparatus 501, the foregoing functions defined in the method of the embodiments of the present disclosure are performed.

The names of messages or information exchanged between multiple devices in embodiments of the present disclosure are for illustrative purposes only and are not intended to limit the scope of such messages or information.

The electronic device provided by the embodiments of the present disclosure and the method for scenario service interaction provided in the foregoing embodiments belong to the same inventive concept, technical details not described in detail in this embodiment may refer to the foregoing embodiments, and this embodiment has the same beneficial effects as the foregoing embodiments.

An embodiment of the present disclosure provides a computer storage medium, where a computer program is stored, and when the program is executed by a processor, the method for interaction of a scenario service provided in the foregoing embodiments is implemented.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

In some implementations, the client, server may communicate using any currently known or future developed network protocol, such as HTTP (HyperText Transfer Protocol), and may be interconnected with any form or medium of digital data communication (e.g., a communication network). Examples of communication networks include local area networks ("LANs"), wide area networks ("WANs"), internets (e.g., the Internet), and peer-to-peer networks (e.g., ad hoc peer-to-peer networks), as well as any currently known or future developed networks.

The computer-readable medium described above may be included in the electronic device; or may be separately present without being assembled into the electronic device.

The computer-readable medium carries one or more programs, and when the one or more programs are executed by the electronic device, the electronic device is caused to displaying a service information setting page in response to a first trigger operation inputted in a target service scenario, where the service information setting page displays a service information setting item associated with at least one scenario service provided by the target service scenario, and the service information setting item at least includes a restriction information setting item.

In response to a second trigger operation for the restriction information setting item, a set restriction attribute value corresponding to the restriction information setting item is obtained, and the restriction attribute value is displayed.

In response to a third trigger operation, a service response manner corresponding to the scenario service is determined based on the restriction information setting item and the restriction attribute value, where the service response manner is configured to generate service response data according to service request data corresponding to the scenario service.

Computer program code for performing the operations of the present disclosure may be written in one or more programming languages, including, but not limited to, object oriented programming languages such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing specified manner functions. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. For example, the first obtaining unit may be further described as "obtaining at least two units of Internet Protocol addresses".

The functions described above may be performed, at least in part, by one or more hardware means components. For example, without limitation, example types of hardware means components that may be used include: field programmable gate arrays (FPGAs), application specific integrated circuits (ASICs), application specific standard products (ASSPs), system on chips (SOCs), complex programmable manner devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to one or more embodiments of the present disclosure, [example 1] provides a method for scenario service interaction, and the method includes: displaying a service information setting page in response to a first trigger operation inputted in a target service scenario, where the service information setting page displays a service information setting item associated with at least one scenario service provided by the target service scenario, and the service information setting item at least includes a restriction information setting item; obtaining, in response to a second trigger operation for the restriction information setting item, a set restriction attribute value corresponding to the restriction information setting item, and displaying the restriction attribute value; determining, in response to a third trigger operation, a service response manner corresponding to the scenario service based on the restriction information setting item and the restriction attribute value, where the service response manner is configured to generate service response data according to service request data corresponding to the scenario service.

According to one or more embodiments of the present disclosure, [example 2] provides a method for scenario service interaction of example 1, the method further includes: optionally, the restriction information setting item includes a resource setting item for setting restriction information corresponding to a service obtaining resource in the scenario service; determining the service response manner corresponding to the scenario service based on the restriction information setting item and the restriction attribute value includes: determining, based on the restriction attribute value corresponding to the resource setting item, a resource prompt manner corresponding to the service obtaining resource already paid in the scenario service, where the resource prompt manner includes a resource prompt trigger threshold and resource prompt presentation information.

According to one or more embodiments of the present disclosure, [example 3] provides a method for scenario service interaction of example 2, the method further includes: optionally, after determining, based on the restriction attribute value corresponding to the resource setting item, the resource prompt manner corresponding to the service obtaining resource already paid out in the scenario service, the method further includes: generating target resource prompt information and presenting the target resource prompt information in a preset presentation manner, in accordance with the service request data including a service obtaining resource and detecting that the service obtaining resource reaches the resource prompt trigger threshold.

According to one or more embodiments of the present disclosure, [example 4] provides a method for scenario service interaction of example 3, the method further includes: optionally, presenting the target resource prompt information in the preset presentation manner includes: displaying, in accordance with the target resource prompt information including visual resource prompt information, the visual resource prompt information in a current display interface for the target service scenario; and/or playing sound prompt information in accordance with the target resource prompt information including the sound prompt information.

According to one or more embodiments of the present disclosure, [example 5] provides a method for scenario service interaction of example 2, the method further includes: optionally, determining, based on the restriction attribute value corresponding to the resource setting item, the resource prompt trigger threshold corresponding to the service obtaining resource already paid in the scenario service includes: multiplying the restriction attribute value corresponding to the resource setting item by a preset number of preset proportions respectively, to obtain the preset number of resource prompt trigger thresholds corresponding to the service obtaining resource already paid in the scenario service.

According to one or more embodiments of the present disclosure, [example 6] provides a method for scenario service interaction of example 2, the method further includes: optionally, the restriction information setting item further includes a service state setting item for being associated with the resource setting item; determining the service response manner corresponding to the scenario service based on the restriction information setting item and the restriction attribute value includes: determining a response restriction manner corresponding to the service request data based on the restriction attribute value corresponding to the service state setting item and the restriction attribute value corresponding to the resource setting item, where the response restriction manner includes at least one of normally responding, delaying a response, and prohibiting a response.

According to one or more embodiments of the present disclosure, [example 7] provides a method for scenario service interaction of example 6, the method further includes: optionally, after determining, based on the resource setting item and the restriction attribute value corresponding to the resource setting item, the resource prompt manner corresponding to the service obtaining resource already paid in the scenario service, the method further includes: generating service response prompt information corresponding to the service request data, and prohibiting a repsonse or delaying a response to the service request data, in accordance with detecting that the service obtaining resource in the scenario service has reached the restriction attribute value corresponding to the resource setting item.

According to one or more embodiments of the present disclosure, [example 8] provides a method for scenario service interaction of example 1, the method further includes: optionally, in response to the first trigger operation inputted in the target service scenario includes: in response to a fourth trigger operation acting on a preset entry trigger control corresponding to the target service scenario, where the entry trigger control is dynamically or statically displayed in a target display interface of the target service scenario.

According to one or more embodiments of the present disclosure, [example 9] provides a method for scenario service interaction of example 8, the method further includes: optionally, the target service scenario is a live streaming scenario; before responding to the fourth trigger operation acting on the preset entry trigger control corresponding to the target service scenario, the method further includes at least one of the following operations: displaying a preset entry hyperlink in a live streaming image of a target live streaming room, and using the preset entry hyperlink as an entry trigger control; displaying a service information setting button in a preset service panel of a target live streaming room, and using the service information setting button as an entry trigger control; displaying, in response to a fifth trigger operation for scenario service and in accordance with the triggered scenario service being a target service, an entry trigger control corresponding to the target service scenario.

According to one or more embodiments of the present disclosure, [example 10] provides a method for scenario service interaction of example 1, the method further includes: optionally, displaying the service information setting page includes: obtaining request object information corresponding to the first trigger operation, and determining an operation permission corresponding to the request object information; and displaying the service information setting page in accordance with that the operation permission allows to open the service information setting page.

According to one or more embodiments of the present disclosure, [example 11] provides a method for scenario service interaction of example 1, the method further includes: optionally, displaying, at a preset position in the target service scenario, service guidance information corresponding to the scenario service.

According to one or more embodiments of the present disclosure, [example 12] provides a method for scenario service interaction of example 1, the method further includes: the target service scenario includes a live streaming scenario, and the scenario service includes a live streaming interaction service; optionally, displaying, at the preset position in the target service scenario, the service guidance information corresponding to the scenario service includes: displaying, in response to an entry trigger operation for a target live streaming room, service guidance information corresponding to the live streaming interaction service at a target display area of the target live streaming room in a form of a message prompt box or an animation, where the target display area includes a top display area, a middle display area, or a bottom display area; and/or displaying, in an information posting area of a target live streaming room, service guidance information corresponding to the live streaming interaction service in a form of a picture message.

According to one or more embodiments of the present disclosure, [example 13] provides an apparatus for scenario service interaction, the apparatus includes: a setting page display module configured to display a service information setting page in response to a first trigger operation inputted in a target service scenario, where the service information setting page displays a service information setting item associated with at least one scenario service provided by the target service scenario, and the service information setting item at least includes a restriction information setting item; a restriction information setting module configured to obtain, in response to a second trigger operation for the restriction information setting item, a set restriction attribute value corresponding to the restriction information setting item, and display the restriction attribute value; and a response manner determination module configured to determine, in response to a third trigger operation, a service response manner corresponding to the scenario service based on the restriction information setting item and the restriction attribute value, where the service response manner is configured to generate service response data according to service request data corresponding to the scenario service.

The above description is merely an illustration of the preferred embodiments of the present disclosure and the principles of the applied technology. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination with a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely illustrative forms of implementing the claims.

## Claims

1. A method for scenario service interaction, comprising:
displaying a service information setting page in response to a first trigger operation inputted in a target service scenario, wherein the service information setting page displays a service information setting item associated with at least one scenario service provided by the target service scenario, and the service information setting item at least comprises a restriction information setting item;
obtaining, in response to a second trigger operation for the restriction information setting item, a set restriction attribute value corresponding to the restriction information setting item, and displaying the restriction attribute value; and
determining, in response to a third trigger operation, a service response manner corresponding to the scenario service based on the restriction information setting item and the restriction attribute value, wherein the service response manner is configured to generate service response data according to service request data corresponding to the scenario service.

2. The method for scenario service interaction of claim 1, wherein the restriction information setting item comprises a resource setting item for setting restriction information corresponding to a service obtaining resource in the scenario service; and
determining the service response manner corresponding to the scenario service based on the restriction information setting item and the restriction attribute value comprises:
determining, based on the restriction attribute value corresponding to the resource setting item, a resource prompt manner corresponding to the service obtaining resource already paid in the scenario service, wherein the resource prompt manner comprises a resource prompt trigger threshold and resource prompt presentation information.

3. The method for scenario service interaction of claim 2, wherein after determining, based on the restriction attribute value corresponding to the resource setting item, the resource prompt manner corresponding to the service obtaining resource already paid out in the scenario service, the method further comprises:
generating target resource prompt information and presenting the target resource prompt information in a preset presentation manner, in accordance with the service request data comprising a service obtaining resource and detecting that the service obtaining resource reaches the resource prompt trigger threshold.

4. The method for scenario service interaction of claim 3, wherein presenting the target resource prompt information in the preset presentation manner comprises:
displaying, in accordance with the target resource prompt information comprising visual resource prompt information, the visual resource prompt information in a current display interface for the target service scenario; and/or
playing sound prompt information in accordance with the target resource prompt information comprising the sound prompt information.

5. The method for scenario service interaction of claim 2, wherein determining, based on the restriction attribute value corresponding to the resource setting item, the resource prompt trigger threshold corresponding to the service obtaining resource already paid in the scenario service comprises:
multiplying the restriction attribute value corresponding to the resource setting item by a preset number of preset proportions respectively, to obtain the preset number of resource prompt trigger thresholds corresponding to the service obtaining resource already paid in the scenario service.

6. The method for scenario service interaction of claim 2, wherein the restriction information setting item further comprises a service state setting item for being associated with the resource setting item; and
determining the service response manner corresponding to the scenario service based on the restriction information setting item and the restriction attribute value comprises:
determining a response restriction manner corresponding to the service request data based on the restriction attribute value corresponding to the service state setting item and the restriction attribute value corresponding to the resource setting item, wherein the response restriction manner comprises at least one of normally responding, delaying a response, and prohibiting a response.

7. The method for scenario service interaction of claim 6, wherein after determining, based on the resource setting item and the restriction attribute value corresponding to the resource setting item, the resource prompt manner corresponding to the service obtaining resource already paid in the scenario service, the method further comprises:
generating service response prompt information corresponding to the service request data, and prohibiting a repsonse or delaying a response to the service request data, in accordance with detecting that the service obtaining resource in the scenario service has reached the restriction attribute value corresponding to the resource setting item.

8. The method for scenario service interaction of claim 1, wherein in response to the first trigger operation inputted in the target service scenario comprises:
in response to a fourth trigger operation acting on a preset entry trigger control corresponding to the target service scenario, wherein the entry trigger control is dynamically or statically displayed in a target display interface of the target service scenario.

9. The method for scenario service interaction of claim 8, wherein the target service scenario is a live streaming scenario;
before responding to the fourth trigger operation acting on the preset entry trigger control corresponding to the target service scenario, the method further comprises at least one of the following operations:
displaying a preset entry hyperlink in a live streaming image of a target live streaming room, and using the preset entry hyperlink as an entry trigger control;
displaying a service information setting button in a preset service panel of a target live streaming room, and using the service information setting button as an entry trigger control; or
displaying, in response to a fifth trigger operation for scenario service and in accordance with the triggered scenario service being a target service, an entry trigger control corresponding to the target service scenario.

10. The method for scenario service interaction of claim 1, wherein displaying the service information setting page comprises:
obtaining request object information corresponding to the first trigger operation, and determining an operation permission corresponding to the request object information; and
displaying the service information setting page in accordance with that the operation permission allows to open the service information setting page.

11. The method for scenario service interaction of claim 1, further comprising:
displaying, at a preset position in the target service scenario, service guidance information corresponding to the scenario service.

12. The method for scenario service interaction of claim **11,** wherein the target service scenario comprises a live streaming scenario, and the scenario service comprises a live streaming interaction service;
displaying, at the preset position in the target service scenario, the service guidance information corresponding to the scenario service comprises:
displaying, in response to an entry trigger operation for a target live streaming room, service guidance information corresponding to the live streaming interaction service at a target display area of the target live streaming room in a form of a message prompt box or an animation, wherein the target display area comprises a top display area, a middle display area, or a bottom display area; and/or
displaying, in an information posting area of a target live streaming room, service guidance information corresponding to the live streaming interaction service in a form of a picture message.

13. An apparatus for scenario service interaction, comprising:
a setting page display module configured to display a service information setting page in response to a first trigger operation inputted in a target service scenario, wherein the service information setting page displays a service information setting item associated with at least one scenario service provided by the target service scenario, and the service information setting item at least comprises a restriction information setting item;
a restriction information setting module configured to obtain, in response to a second trigger operation for the restriction information setting item, a set restriction attribute value corresponding to the restriction information setting item, and display the restriction attribute value; and
a response manner determination module configured to determine, in response to a third trigger operation, a service response manner corresponding to the scenario service based on the restriction information setting item and the restriction attribute value, wherein the service response manner is configured to generate service response data according to service request data corresponding to the scenario service.

14. An electronic device, comprising:
one or more processors;
a storage device configured to store one or more programs;
the one or more programs, when executed by the one or more processors, causing the one or more processors to implement the method for scenario service interaction of any of claims 1 to 12.

15. A storage medium comprising computer-executable instructions, wherein the computer-executable instructions, when executed by a computer processor, perform the method for scenario service interaction of any of claims 1 to 12.

16. A computer program product, wherein the computer program product comprises a computer program, the computer program, when executed by a processor, implements the method for scenario service interaction of any of claims 1 to 12.
